# EUROPEAN PATENT APPLICATION

(11) **EP 4 429 200 A1**
(43) Date of publication of application: **11.09.2024**
(21) Application number: 23208688.4
(22) Date of filing: 09.11.2023
(51) Int. Cl.: H04L 67/10

(54) **APPARATUS FOR AUTOMATING CONSULTING BASED ON WEB FOR CLOUD MIGRATION**

(30) Priority: 09.03.2023 KR 20230031272; 09.03.2023 KR 20230031281; 31.05.2023 KR 20230070469; 31.05.2023 KR 20230070471
(71) Applicant: Samsung SDS Co., Ltd., Seoul 05510 (KR)
(72) Inventor: Yuk, Yunhyeong, 05510 Seoul (KR); Huh, Kyungwook, 05510 Seoul (KR); Yang, Sooyeon, 05510 Seoul (KR); Baik, Maengsoon, 05510 Seoul (KR)
(74) Representative: Grünecker Patent- und Rechtsanwälte PartG mbB

(57) **Abstract**

An apparatus for automating consulting for cloud migration includes one or more processors; and a storage medium storing one or more programs configured to be executable by the one or more processors, wherein the one or more processors are configured to: analyze a migration method, a type of migration, migration difficulty and a migration effort to migrate resources of an existing computer room for a work system to a cloud, and compute at least one of an architecture of the cloud, a result of comparison of total cost ownership (TCO) for resources of the cloud versus resources of the existing computer room for the work system, and a roadmap for each migration stage when migrating to the cloud based on at least one of the migration method, the type of migration, the migration difficulty and the migration effort.

## Description

### CROSS-REFERENCE TO RELATED APPLICATION(S)

This application claims benefit of priority to Korean Patent Application No. 10-2023-0070471 filed on May 31, 2023, Korean Patent Application No. 10-2023-0070469 filed on May 31, 2023, Korean Patent Application No. 10-2023-0031281 filed on March 9, 2023, and Korean Patent Application No. 10-2023-0031272 filed on March 9, 2023, in the Korean Intellectual Property Office, the disclosures of which are incorporated herein by reference in their entirety.

### BACKGROUND

Example embodiments in the example embodiment relate to an apparatus for automating consulting based on a web for cloud migration.

Cloud migration may refer to migrating a portion or the entirety of IT resources (a server, a storage, a network, and the like) operating on-premise to a cloud environment.

Tools, procedures, techniques, outputs, and the like, are defined for consulting for such cloud migration, but there may be deviations in quality in results of consulting depending on a person using the same.

A consulting method may be systematized, but the method is not automated, a consultant may inevitably need to intervene, which may read to degradation of quality of results depending on an ability of each consultant.

### SUMMARY

An example embodiment in the example embodiment is to provide an apparatus for automating consulting on the basis of a web for cloud migration which may level up quality of consulting performance, may drastically reduce the time required for consulting tasks, and may decrease efforts of the consultants.

According to an example embodiment in the example embodiment, an apparatus for automating consulting for cloud migration includes one or more processors; and a storage medium storing one or more programs configured to be executable by the one or more processors, wherein the one or more processors are configured to: analyze a migration method, a type of migration, migration difficulty and a migration effort to migrate resources of an existing computer room for a work system to a cloud, and compute at least one of an architecture of the cloud, a result of comparison of total cost ownership (TCO) for resources of the cloud versus resources of the existing computer room for the work system, and a roadmap for each migration stage when migrating to the cloud based on at least one of the migration method, the type of migration, the migration difficulty and the migration effort.

### BRIEF DESCRIPTION OF DRAWINGS

The above and other aspects, features, and advantages in the example embodiment will be more clearly understood from the following detailed description, taken in combination with the accompanying drawings, in which:
FIG. 1 is a diagram illustrating an apparatus for automating consulting for cloud migration according to an example embodiment of the present disclosure;
FIG. 2 is a diagram illustrating analyzing a level of preparation of a customer company for introduction of cloud according to an example embodiment of the present disclosure;
FIG. 3 is a diagram illustrating selection of a migration method according to an example embodiment of the present disclosure;
FIG. 4 is a diagram illustrating analysis of a type of migration according to an example embodiment of the present disclosure;
FIG. 5 is a diagram illustrating analysis of migration difficulty according to an example embodiment of the present disclosure;
FIG. 6 is a diagram illustrating estimation of migration effort according to an example embodiment of the present disclosure;
FIG. 7 is a diagram illustrating a process of computing an architecture, results of TCO comparison and a roadmap for each migration stage according to an example embodiment of the present disclosure;
FIGS. 8A to 8D are diagrams illustrating outputs displayed on an output portion according to an example embodiment of the present disclosure;
FIG. 9 is a flowchart illustrating a method for automating consulting for cloud migration according to an example embodiment of the present disclosure; and
FIG. 10 is a block diagram illustrating a computing device for fully or partially implementing an apparatus for automating consulting for cloud migration according to an example embodiment of the present disclosure.

### DETAILED DESCRIPTION

Hereinafter, embodiments in the example embodiment will be described as follows with reference to the accompanying drawings.

Redundant descriptions and detailed descriptions of known functions and elements that may unnecessarily render the gist of the present disclosure obscure will be omitted. Also, terms to be described later may be defined in consideration of functions in the present disclosure, which may vary according to intentions or customs of a user or an operator. Accordingly, the definition should be made based on the descriptions below. The terms herein are provided to merely examples, and are not limited to those set forth herein. Terms such as "first" and "second" may be used in describing various elements, but the above elements shall not be restricted to the above terms. An expression used in the singular encompasses the expression of the plural, unless it has a clearly different meaning in the context. In this description, the terms such as "including" or "comprising" are intended to indicate characteristics, numbers, stages, operations, elements, a portion or combination thereof, and should not be construed to exclude the presence or possibility of one or more other characteristics, numbers, stages, operations, elements, portions or combinations thereof other than those described.

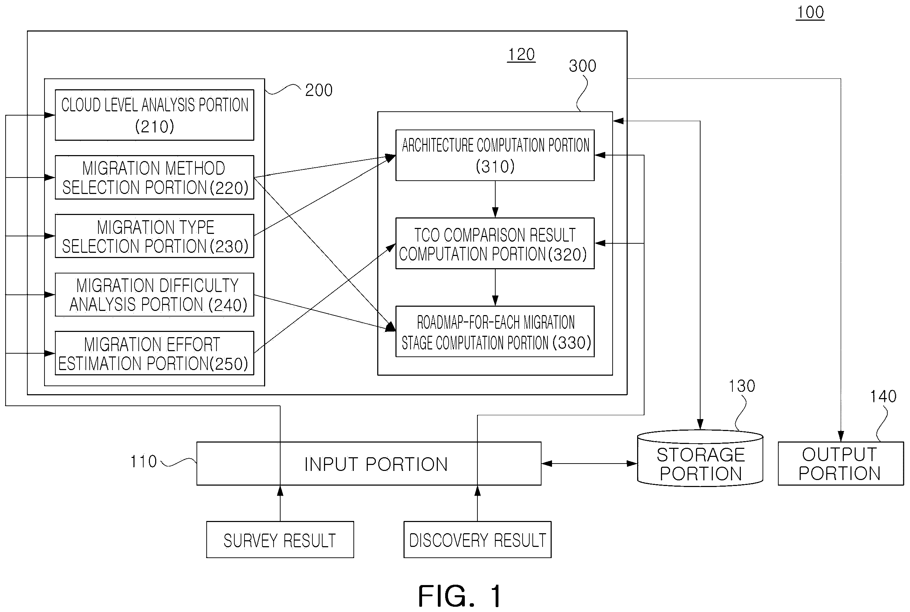

FIG. 1 is a diagram illustrating an apparatus 100 for automating consulting for cloud migration according to an example embodiment. The apparatus 100 for automating consulting may include an input portion 110, an automation portion 120, a storage portion 130 and an output portion 140. The automation portion 120 may include an analysis engine 200 and a computation portion 300.

First, the input portion 110 may receive a survey result and a discovery result.

The survey result may be transferred to the analysis engine 200, and may be stored in the storage portion 130 simultaneously. The survey result will be described in greater detail later.

Also, the discovery result may be transferred to the computation portion 300, and may be stored in the storage portion 130 simultaneously. The discovery result may refer to an infrastructure resource status for various computing devices, may include various resources, such as a processor, a core, a usage rate, a memory, an OS type, an OS version, a UNIX size, a GPU, a DB type, a DB size in the case of a server, and in the case of storage, the discovery result may include a type and a grade of storage, and a type or capacity of disk. An example embodiment thereof is not limited thereto and other various information may be included.

The automation portion 120 may receive a survey result and discovery result and may automate consulting contents when migrating resources of a existing computer room for a work system to a cloud.

Specifically, in the automation portion 120, the analysis engine 200 may analyze a migration method, a type of migration, migration difficulty and a migration effort to move resources of the existing computer room for the work system to the cloud on the basis of rules based on a questionnaire. Here, being based on a questionnaire may refer to a method of summing and averaging pre-assigned scores for answers to questions included in each survey of the migration method, the type of migration, migration difficulty, and the migration effort.

To this end, the analysis engine 200 may include a cloud level analysis portion 210, a migration method selection portion 220, a migration type selection portion 230, a migration difficulty analysis portion 240, and a migration effort estimation portion 250.

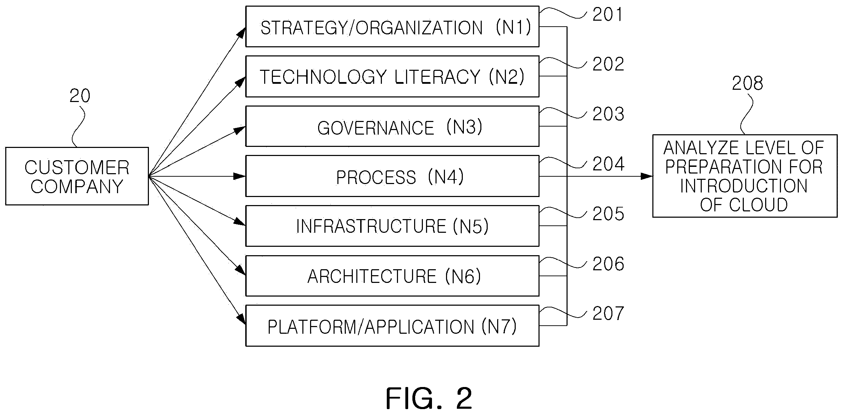

First, the cloud level analysis portion 210 may analyze a level of preparation of a customer company for introduction of cloud based on the survey result. A process of analyzing the level of preparation of a customer company for introduction of cloud will be described with reference to FIG. 2 below.

FIG. 2 is a diagram illustrating analyzing a level of preparation of a customer company for introduction of cloud according to an example embodiment.

As illustrated in FIG. 2, the cloud level analysis portion 210 may analyze the level of preparation for introduction of cloud of the customer company 20 according to an average value obtained by summing scores pre-assigned to answers to questions included in the survey (208).

Here, the questions included in the survey may be evaluation questions for diagnosing the level of preparation of the customer company for introduction of cloud, and the section may include at least one of a strategy/organization 201, a technology literacy 202, governance 203, a process 204, an infrastructure 205, an architecture 206, and a platform/application 207. N1 to N7 may be natural numbers of 1 or more and may refer to the number of questions for each section.

Table 1 below relates to a survey of the strategy/organization 201, and lists questions and answers thereof as an example. In other words, the level of preparation of introduction of cloud of the customer company 20 for the strategy/organization may be analyzed according to an average value obtained by summing the scores (e.g., 1 to 5 points) pre-assigned to the answer to the questions for the strategy/organization.

**[Table 1]**

| Se cti on | Question | Answer | | | | |
|---|---|---|---|---|---|---|
| Str ate gy/ org ani zat ion | Has your company established an introduction of cloud strategy to spread cloud utilization throughout the company? | 1 point: No strategy or guide | 2 points: No stipulated introduction of cloud strategy/guide is present, and each organization is introducing cloud services by applying arbitrary criteria. | 3 points: Although strategies and guidelines stipulated are present throughout the company, they are not actually utilized in each organization. | 4 points: An introduction of cloud strategy and guide at the company level is present, and each organization uses them as a guide for using criteria to utilize the company-wide integrated cloud service considering characteristics of the | 5 points - Company-wide strategies and guides regularly updated are present and used. |
| | | | | | organization. | |
| | Does your company have a roadmap and criteria for cloud migration of your entire system, including legacy systems? | 1 point: No roadmap and criteria for cloud migration | 2 points: Roadmap and criteria for cloud migration are present, but has not been used | 3 points: By establishing a roadmap and criteria for cloud migration for the entire system, including legacy systems, less than 30% of some systems has been moved to the cloud | 4 points: A roadmap and criteria for cloud migration of enterprise systems has been established and more than 70% of all systems has been moved to the cloud | 5 points: Cloud migration of the company-wide system has been completed, and cloud technology trends have been regularly reflected in the cloud migration roadmap |

Table 1 lists the strategy/organization 201 as an example, but other sections may be equally applied. For example, the technology literacy 202 may include questions about whether a cloud education program is provided, the governance 203 may include questions about whether a governance organization is operated for introduction of cloud and utilization, the process 204 may include questions about whether a cloud purchase process is present, the infrastructure 205 may include questions about whether a cloud cost management process is present, and the architecture 206 may include questions about whether criteria for cloud environment design is present, and the platform/application 207 may include questions about whether a PaaS framework may be utilized for cloud application development. It should be noted that the questions of the specific survey are intended to help understand the example embodiments, and an example embodiment thereof is not limited thereto.

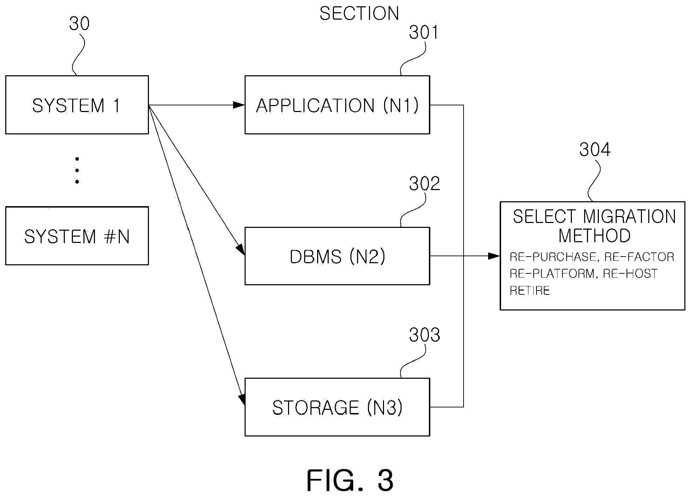

The migration method selection portion 220 may select a migration method of resources of an existing computer room for a work system based on a survey result. Here, the migration method may include a rehost method of transferring only the environment of the existing work system to the cloud, a replatform method of partially changing the OS or middleware environment of the existing work system and migrating the same to the cloud, a refactor method of reconstructing application of the existing work system, a repurchase method of migrating the work system to software as a service (SaaS) and a retire method of discarding the existing work system. The process of analyzing the migration method will be described with reference to FIG. 3 below.

FIG. 3 is a diagram illustrating selection of a migration method according to an example embodiment.

As illustrated in FIG. 3, the migration method selection portion 220 may select one of the migration methods for each of sections 301 to 303 according to an average value obtained by summing and averaging scores pre-assigned to answers to questions included in the survey for each migration method from 301 to 303 by section with respect to the work system 30 (304). The selection of the migration method may be analyzed by work system.

Here, the questions included in the survey may be evaluation questions for migrating resources of the existing computer room for the work system to the corresponding migration method, and the section may include at least one of the application 301, the database management system (DBMS) 302 and the storage 303. N1 to N3 may be natural numbers of 1 or more and may refer to the number of questions for each section.

Table 2 relates to a survey of the application 301 and lists questions and answers thereof as an example. That is, one of the migration methods for the application 301 may be selected according to an average value obtained by summing and averaging scores (e.g., 1 to 5 points) pre-assigned to answers to questions for the application 301. For example, the migration method having the highest average value may be selected.

**[Table 2]**

| Section | Migration method | Question | Answer |
|---|---|---|---|
| Application | Retire | How would you represent the degree of duplication of key functions with other applications which your company has? | 1 to 5 points |
| | | Will it be retired or consolidated into another system? | 1 point: no 2 points: yes |
| | Repurchase | Is the work system a commercial S/W? | 1 point: no 2 points: yes |
| | | .. | .. |
| | .. | .. | .. |

Table 2 list only the application 301, but may be similarly applied to the DBMS 302 and storage 303. Also, it should be noted that the questions of the specific survey are intended to help understand the example embodiments, and an example embodiment thereof is not limited thereto.

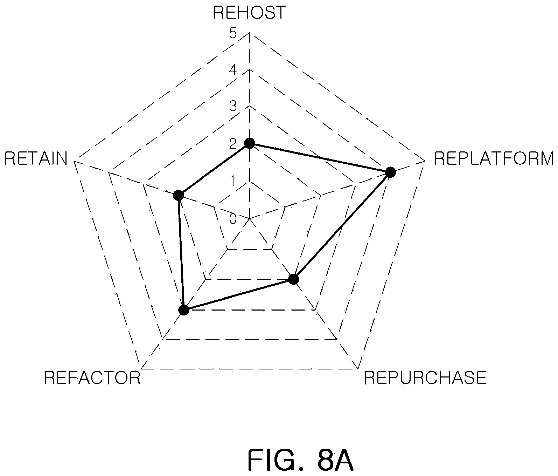

FIG. 8A is a diagram illustrating a migration method displayed on the output portion 140 in a radar chart according to an example embodiment.

As illustrated in FIG. 8A, an average value of the migration methods, that is, a rehost method, a replatform method, a refactor method, a repurchase method, and a retire method with respect to the application 301 may be illustrated in a radar chart.

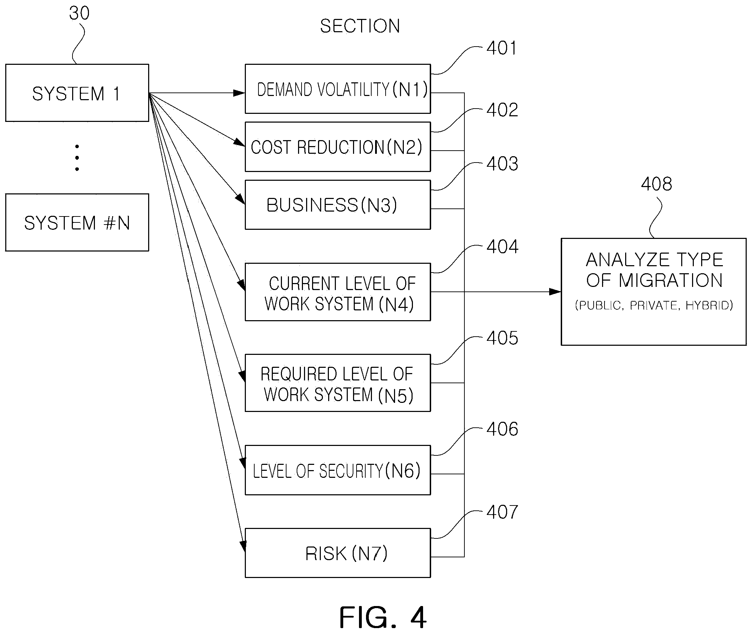

The migration type selection portion 230 may select a type of migration of a resource of a existing computer room for a work system on the basis of a survey result. Here, the type of migration may include at least one of a private cloud in which an independent cloud is built, a public cloud in which a number of users share resources, and a hybrid cloud in which a private cloud and a public cloud are combined. A process of selecting the type of migration will be described with reference to FIG. 4 below.

FIG. 4 is a diagram illustrating analysis of a type of migration according to an example embodiment.

As illustrated in FIG. 4, the migration type selection portion 230 select one of the types of migration according to an average value obtained by summing and averaging scores pre-assigned to answers to questions included in the survey as 401 to 407 by section for the work system 30 (408). The selection of the type of migration may be selected for each section 401 to 407 or the work system 30. Also, the selection of the type of migration may be analyzed by each work system.

Here, the questions included in the survey may be evaluation questions for migrating the work system to the corresponding type of migration, and the section may include at least one of demand volatility 401, cost reduction 402, business 403, a current level of work system 404, a required level of work system 405, a level of security 406 and a risk 407. N1 to N7 may be natural numbers of 1 or more and may refer to the number of questions for each section.

Table 3 below relates to a survey on the demand volatility 401 and lists questions and answers thereto as an example. Here, the demand volatility may indicate whether the number of users or data fluctuates greatly.

**[Table 3]**

| Type of migration | Question | Answer |
|---|---|---|
| Demand volatility | Is the number of users flexible? | 1 point: constant number of users |
| | | 2 points: number of users fluctuates but is predictable |
| | | 3 points: number of users fluctuates frequently and is difficult to predict. |
| | ... | ... |

Only the demand volatility 401 is listed in Table 3, but other sections may be similarly applied. For example, the cost reduction 402 may include questions about whether cost reduction is considered the most important factor in the introduction of cloud, the business 403 may include questions about whether there are many technologies required for cloud migration as a measure to secure a competitive edge, the current level of work system may be the current level of the work system, and may include questions about whether there are many interfaces, the required level of work system may be the level required when migrating to the cloud, and may include questions about whether customized storage technology is required, the level of security may be the level of security of the work system and may include questions about whether confidential data is present, and the risk may include questions about whether the scale of expected damage is large in the event of a work system shutdown. It should be noted that the questions of the specific survey are intended to help understand the example embodiments, and an example embodiment thereof is not limited thereto.

According to an example embodiment, the demand volatility, the cost reduction, business, and the current level of work system may relate to the private cloud among types of migration, and the required level of work system, the level of security and risk may relate to the public cloud.

In this case, the migration type selection portion 230 may select the private cloud among the types of migration when an average value obtained by summing and averaging scores pre-assigned according to answers of the entirety of questions of the section for the private cloud is greater than an average value obtained by summing and averaging scores pre-assigned according to answers of the entirety of questions in the section for the public cloud.

Also, the migration type selection portion 230 may select the public cloud among the above types of migration when an average value obtained by summing and averaging scores pre-assigned according to answers of the entirety of questions of the section for the private cloud is smaller than an average value obtained by summing and averaging scores pre-assigned according to answers of the entirety of questions in the section for the public cloud.

Also, the migration type selection portion 230 may select the hybrid cloud among the above types of migration when an average value obtained by summing and averaging scores pre-assigned according to answers of the entirety of questions of the section for the private cloud is the same as an average value obtained by summing and averaging scores pre-assigned according to answers of the entirety of questions in the section for the public cloud.

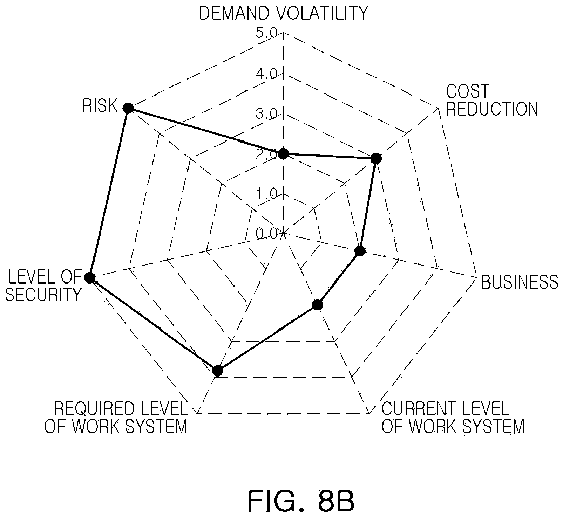

FIG. 8B is a diagram illustrating the type of migration displayed on the output portion 140 in a radar chart according to an example embodiment.

As illustrated in FIG. 8B, an average value for questions included in each survey of each section, that is, the demand volatility 401, the cost reduction 402, the business 403, the current level of work system 404, the required level of work system 405, the level of security 406 and the risk 407 may also be presented in a radar chart.

The migration difficulty analysis portion 240 may analyze migration difficulty on the basis of a survey result. Here, the migration difficulty may be a degree of difficulty for migrating resources of a existing computer room for a work system to a cloud.

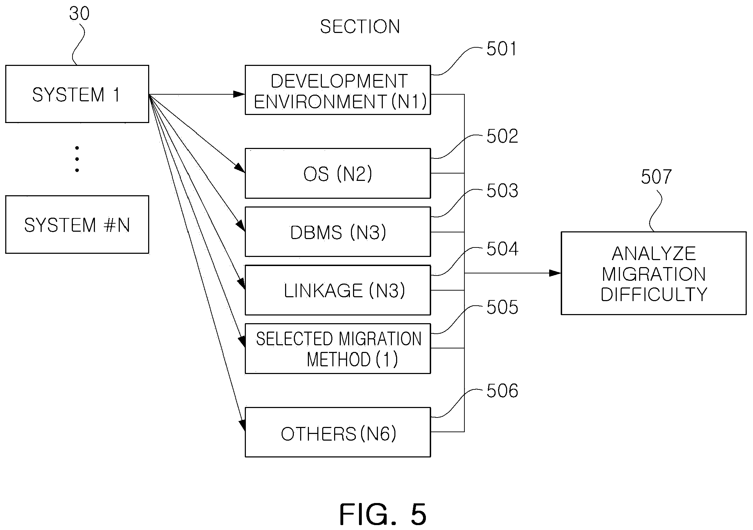

Hereinafter, a process of analyzing migration difficulty will be described with reference to FIG. 5.

FIG. 5 is a diagram illustrating analysis of migration difficulty according to an example embodiment.

As illustrated in FIG. 5, the migration difficulty analysis portion 240 analyze the migration difficulty for each section according to an average value obtained by summing and averaging scores pre-assigned to answers to questions included in the survey as 501 to 506 by section for the work system 30 (507). Migration difficulty may also be analyzed for each work system.

Here, the questions included in the survey may be evaluation questions for analyzing the difficulty of migrating the resources of the existing computer room for the work system to the cloud, and the section may include at least one of a development environment 501 of the work system 30, an operating system (OS) 502, a database management system (DBMS) 503, a linkage 504, a selected migration method 505 and others 506.

Table 4 below relates to a survey of the development environment 501 and lists questions and answers thereof as an example. According to Table 4, as an example of a question about the development environment 501, the question of what language the work system was developed on may be included. As such, the migration difficulty for the development environment 501 may be analyzed according to the average value obtained by summing and averaging scores (e.g., 1 to 5 points) pre-assigned to answers to questions for the development environment 501. For example, when the average value is the highest, migration difficulty may be analyzed as relatively high.

**[Table 4]**

| Section | Question | Answer |
|---|---|---|
| Development environment | What language was the work system developed on? | 1 point: Linux/Window language (no compiler changes) |
| | | 2 points: Linux/Window language (requires compiler version upgrade or type change) |
| | | 3 points: Unix-based (C, ProC, Unix Shell, or the like,) |
| | | 4 points: ..., |
| | | 5 points: ... |
| | ... | ... |

Although Table 4 illustrates only the development environment 501, other sections may be similarly applied. For example, the operating system (OS) 502 may include questions about the importance of Unix. The DBMS 503 may include questions about what kind of DBMS to use. The linkage 504 may include questions about how many external systems are linked to the work system. The selected migration method 505 may include which migration method is used among the migration methods. The others section 506 may include questions about availability of public clouds and legal regulations.

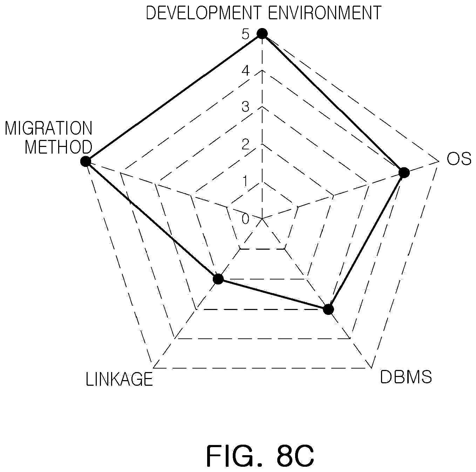

FIG. 8C is a diagram illustrating the migration difficulty displayed on the output portion 140 in a radar chart according to an example embodiment.

As illustrated in FIG. 8C, an average value for each section, that is, the development environment 501, the operating system (OS) 502, the DBMS 503, the linkage 504, and the selected migration method 505 may be illustrated in a radar chart.

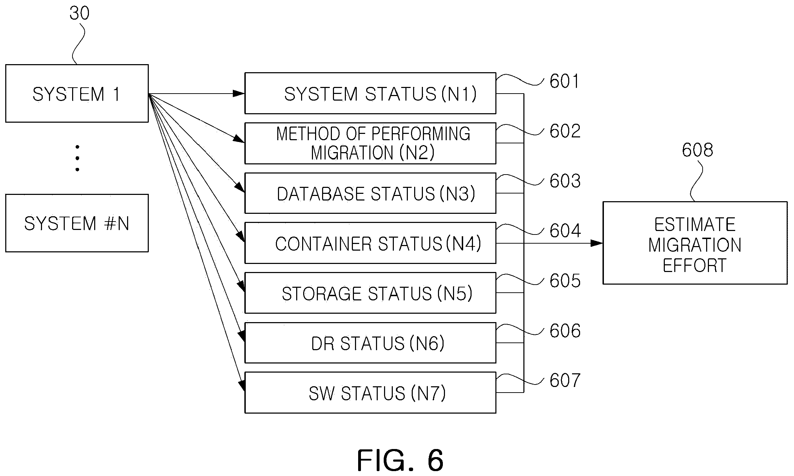

The migration effort portion estimation 250 may analyze the migration effort on the basis of a survey result. Here, the migration effort may refer to the effort for manpower put in to migrate resources of an existing computer room for a work system to a cloud. The expression "effort" is a figure representing the number of people required for a certain operation in terms of working hours or working days and can also be referred to as a "man-hour estimation". A process of estimating migration effort will be described with reference to FIG. 6 below.

FIG. 6 is a diagram illustrating estimation of migration effort according to an example embodiment.

As illustrated in FIG. 6, the migration effort estimation portion 250 may estimate the migration effort by adding the entirety of values multiplied by a predetermined constant to answers to questions included in the survey by each section 601 to 607 for the work system 30, where the predetermined constant may be different for each question (608). The migration effort may also be analyzed by work system.

Here, the section may include at least one of a cloud system status 601, a method of performing migration 602, a database status 603, a container status 604, a storage status 605, a disaster recovery (DR) status 606 and a software status 607. N1 to N7 may be natural numbers of 1 or more and may refer to the number of questions for each section.

The system status 601 may refer to the overall status of the work system, and may include questions about the number or capacity of all servers, containers, or the like, provided in the work system. The method of performing migration 602 may include questions about the number of virtual machines (VMs) required for migration when virtual machines are used for cloud migration. The database status 603 may refer to the database status provided in the work system, and may include questions about the number of open installation type DB redundancy configurations, the number of managed DB redundancy configurations, and the like. The container status 604 may refer to the status of the containers installed in the work system, and may include questions about the number of WEB/AP redundancy and the number of new containers. The storage status 605 may refer to the status of the storage installed in the work system, and may include questions about the number of installed NAS. The disaster recovery (DR) status 506 may include questions about a DR replication method. The SW status 607 may refer to the status of software installed in the work system, and may include questions about the number of SQL (structured query language) revisions.

Depending on the example embodiment, each section of the survey described above may be further divided into more detailed sections or may be modified in a manner to assign a weight to each question.

The computation portion 300 of the automation portion 120 may compute an architecture of cloud, result of comparison of total cost ownership (TCO) with resources in the cloud versus resources in the existing computer room for the work system, and a roadmap for each migration stage when migrating to the cloud on the basis of at least one of the migration method, the type of migration, the migration difficulty and the migration effort.

The computation portion 300 may include an architecture computation portion 310, a TCO comparison result computation portion 320 and a roadmap-for-each migration stage computation portion 330.

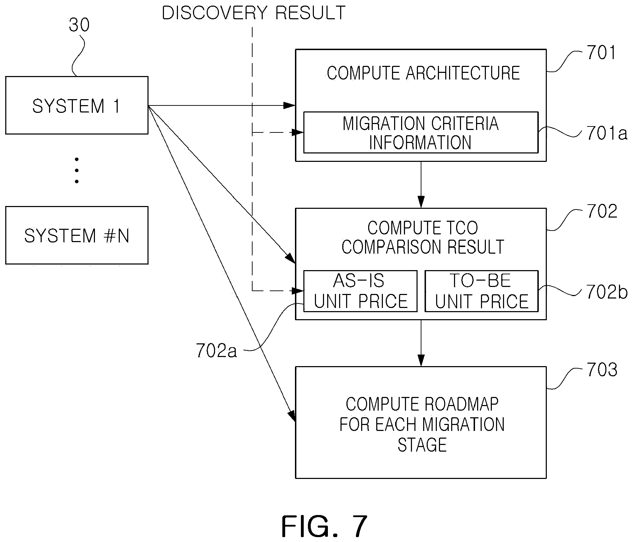

FIG. 7 is a diagram illustrating a process of computing an architecture, results of TCO comparison and a roadmap for each migration stage according to an example embodiment.

Hereinafter, operations of the architecture computation portion 310, the TCO comparison result computation portion 320 and the roadmap-for-each migration stage computation portion 330 will be described with reference to FIGS. 1 and 7.

Specifically, the architecture computation portion 310 may compute an architecture by mapping resources of an existing computer room for a work system to resources of a cloud selected according to the migration method and the type of migration with reference to migration criteria information 701a. Here, the migration criteria information may be information in the form of a table in which resources of an existing computer room for the work system 30 and resources of a cloud are mapped.

The TCO comparison result computation portion 320 may compute the total cost ownership of resources in the existing computer room for work system 30 with reference to the discovery result of the resources of the existing computer room for the work system 30 and the resource unit price table 702a of the existing computer room for the work system 30.

Thereafter, the TCO comparison result computation portion 320 may compute the total cost of cloud resources according to the migration method and the type of migration with reference to the cloud resource unit price table 702b. In this case, the total cost may include the cost according to the migration effort obtained as above.

Thereafter, the TCO comparison result computation portion 320 may compute a result of comparison of total cost ownership for resources of the existing computer room for the work system 30 and total cost for cloud resources.

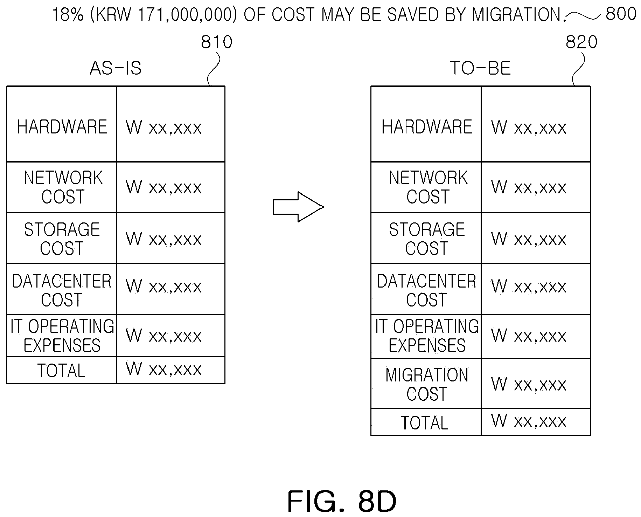

FIG. 8D is a diagram illustrating a comparison of total cost ownership displayed on the output portion 140 according to an example embodiment.

As illustrated in FIG. 8D, only the total cost reduced when migrating to the cloud may be illustrated (800) or respective costs, such as hardware costs, network costs, storage costs, data center costs, and IT operating costs, may be compared and illustrated (810 and 820).

The roadmap-for-each migration stage computation portion 330 may compute a roadmap for each migration stage on the basis of at least one of a type of migration, migration difficulty, and a result of comparison of total cost. Here, the roadmap for each migration stage may refer to a migration timing for migrating resources of an existing computer room for a work system to a cloud. Accordingly, the migration timing may be adjusted, such as migrating later when the migration difficulty is high or migrating first when the total cost is low.

The storage portion 130 may store various programs for implementing the functions of the automation portion 120, the discovery result, the survey result, the unit price table, and a level of preparation of a customer company, a migration method, a type of migration, migration difficulty, a migration effort, an architecture, a result of TCO comparison and a roadmap for each migration stage for introduction of cloud obtained as above.

Also, the storage portion 130 may further include pre-stored cloud environment analysis data or operation model data, and the cloud environment analysis data or operation model data may be output through the output portion 140.

Here, the cloud environment analysis data may be an analysis of the technical environment or external environment surrounding the customer company for cloud migration, and may be a report combining cloud-based technology templates and various industry-specific analysis data templates to suit characteristics of a target customer. In particular, the technical environment analysis may provide a reference for overall cloud technology and target cloud technology, and the external environment analysis may be used as a reference for legal/regulatory trends and market trends by identifying the industry of a customer company.

Also, operation model data may be criteria for an operation model required in a cloud environment, and may be a report in which information required by a customer are combined using a pre-stored operation model template. The operation model may include ① an operation management model ② a cloud organization (3) a cloud process.

Finally, the output portion 140 may output at least one of the level of preparation of a customer company, the migration method, the type of migration, the migration difficulty, the migration effort, the architecture, the result of TCO comparison and the roadmap for each migration stage for introduction of cloud obtained as above. For example, the output portion 140 may be output in a web UI form or in various forms such as a PDF form.

As described above, according to an example embodiment, by analyzing the migration method, the type of migration, the migration difficulty and the migration effort for migrating resources of an existing computer room for a work system to the cloud, and computing at least one of the result of comparison of total cost ownership of cloud resources versus resources of the existing computer room for the cloud architecture and the work system and the roadmap for each migration stage when migrating to cloud on the basis of at least one of the migration method, the type of migration, the migration difficulty and the migration effort, the quality of consulting performance may be leveled upward, the time required for consulting tasks may be drastically reduced, and the effort of the consultant may be reduced.

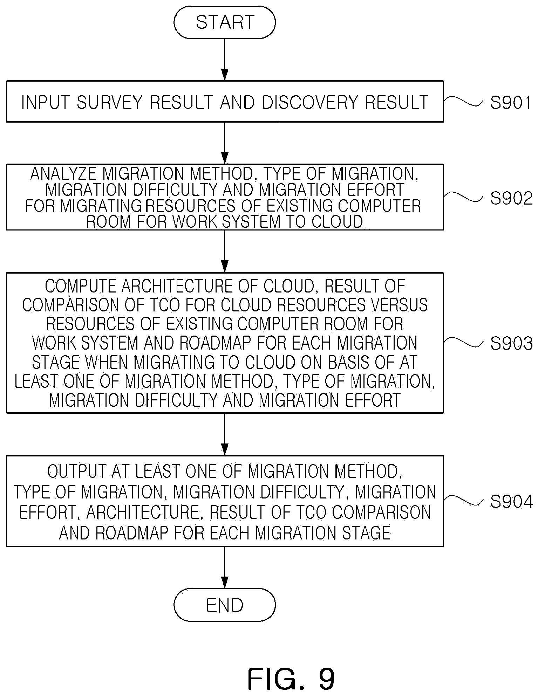

FIG. 9 is a flowchart illustrating a method for automating consulting for cloud migration according to an example embodiment.

Hereinafter, a method for automating consulting for cloud migration according to an example embodiment will be described with reference to FIGS. 1 to 9. However, overlapping descriptions described with reference to FIGS. 1 to 8D will not be provided for ease of description.

Referring to FIGS. 1 to 9, a method for automating consulting for cloud migration according to an example embodiment may be started by receiving a survey result and a discovery result from an input portion 110 (S901).

Thereafter, the automation portion 120 may receive the survey result and the discovery result and may automate consulting contents when migrating resources of an existing computer room for a work system to a cloud.

Specifically, the automation portion 120 may analyze a migration method, a type of migration, a migration difficulty and a migration effort for migrating resources of an existing computer room for the work system to the cloud on the basis of rules based on a questionnaire (S902). Here, being based on rules may refer to a method of summing and averaging pre-assigned scores for answers to questions included in each survey of the migration method, the type of migration, the migration difficulty, and the migration effort, as described above.

Thereafter, the automation portion 120 may compute the architecture of the cloud, a result of comparison of total cost ownership (TCO) for cloud resources versus resources of the existing computer room for the work system and a roadmap for each migration stage when migrating to the cloud on the basis of at least one of the migration method, the type of migration, the migration difficulty and the migration effort (S903).

Finally, the automation portion 120 may output at least one of the migration method, the type of migration, the migration difficulty, the migration effort, the architecture, the result of TCO comparison and the roadmap for each migration stage obtained as above (S904). For example, the automation portion 120 may output the information in a web UI form or in various forms such as a PDF form. In example embodiments, a level of preparation of a customer company for introduction of cloud may be further output.

As described above, according to an example embodiment, by analyzing the migration method, the type of migration, the migration difficulty and the migration effort to move the resources of the existing computer room for the work system to the cloud and computing at least one of the cloud architecture, the result of comparison of total cost ownership of cloud resources versus resources of the existing computer room for work system and the roadmap for each migration stage when migrating to the cloud on the basis of at least one of the migration method, the type of migration, the migration difficulty and the migration effort, the quality of consulting performance may be leveled upward, the time required for consulting tasks may be drastically reduced, and the effort of the consultant may be reduced.

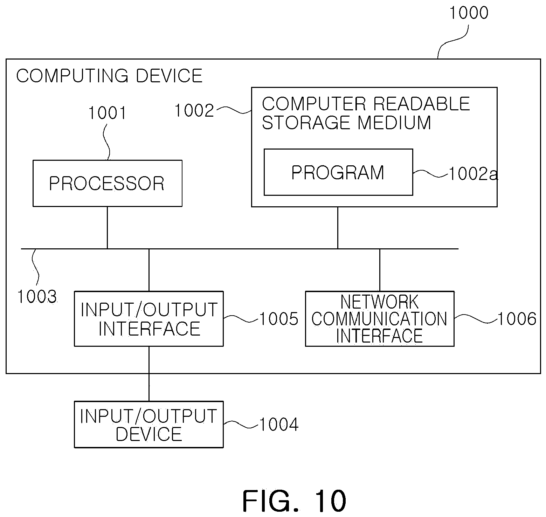

FIG. 10 is a block diagram illustrating a computing device for fully or partially implementing an apparatus for automating consulting for cloud migration according to an example embodiment, and may be applied to the apparatus 100 for automating consulting illustrated in FIG. 1.

As illustrated in FIG. 10, a computing device 1000 may include at least one processor 1001, a computer readable storage medium 1002 and a communication bus 1003.

The processor 1001 may allow the computing device 1000 to operate as in the aforementioned example embodiment. For example, the processor 1001 may execute one or more programs stored in the computer readable storage medium 1002. The one or more programs may include one or more computer executable commands, and the computer executable commands may be configured to allow the computing device 1000 to perform operations according to the example embodiment when executed by the processor 1001.

The computer readable storage medium 1002 may be configured to store computer executable commands to program code, program data, and/or other suitable form of information. A program 1002a stored in a computer readable storage medium 1002 may include a collection of instructions executable by the processor 1001. In an example embodiment, the computer readable storage medium 1002 may be implemented as a memory (a volatile memory such as a random access memory, a non-volatile memory, or a suitable combination thereof), one or more magnetic disk storage devices, optical disk storage devices, flash memory devices, other types of storage media accessible by the computing device 1000 and storing desired information, or a suitable combination thereof.

The communication bus 1003 may interconnect various other components of the computing device 1000, including the processor 1001 and the computer readable storage medium 1002.

The computing device 1000 may also include one or more input/output interfaces 1005 and one or more network communication interfaces 1006 providing interfaces for the one or more input/output devices 1004. The input/output interface 1005 and the network communication interface 1006 may be connected to the communication bus 1003. The network may be implemented as one of a cellular network, such as global system for mobile communications (GSM), enhanced data rates for GSM evolution (EDGE), general packet radio service (GPRS), code division multiple access (CDMA), time division-CDMA (TD-CDMA), universal mobile telecommunications system (UMTS), long term evolution (LTE), or other cellular networks.

The input/output device 1004 may be connected to other components of the computing device 1000 through the input/output interface 1005. Examples of the input/output device 1004 may include a pointing device (such as a mouse or trackpad), a keyboard, a touch input device (such as a touchpad or touchscreen), a voice or sound input device, an input device such as various types of sensor devices and/or imaging devices, and/or an output device such as a display device, a printer, a speaker and/or a network card. The example input/output device 1004 may be included in the computing device 1000 as a component included in the computing device 1000, or may be connected to the computing device 1000 as a device distinct from the computing device 1000.

The example embodiments may include a program for performing the methods described herein on a computer, and a computer-readable recording medium including the program. The computer readable recording medium may include program instructions, local data files, local data structures, or the like, alone or in combination. The media may be specially designed and configured for the example embodiments, or may be commonly available in the field of computer software. Examples of the computer readable may media include magnetic media such as a hard disk, a floppy disk and a magnetic tape, optical media such as a CD-ROM and DVD, and a hardware device specially configured to store and execute program instructions, such as a ROM, a RAM, a flash memory. Examples of the program may include machine language codes generated by a compiler, and also high-level language codes executed by a computer using an interpreter.

According to the aforementioned example embodiments, by analyzing the migration method, the type of migration, the migration difficulty and the migration effort to move resources of the existing computer room for the work system to the cloud and computing at least one of the architecture of cloud, the result of comparison of total cost ownership of cloud resources versus resources of the existing computer room for the work system and the roadmap for each migration stage when migrating to the cloud, the quality of consulting performance may be leveled upward, the time required for consulting tasks may be drastically reduced, and the effort of the consultant may be reduced.

While the example embodiments have been illustrating and described above, it will be configured as apparent to those skilled in the art that modifications and variations may be made without departing from the scope in the example embodiment as defined by the appended claims.

## Claims

1. An apparatus for automating consulting for cloud migration, the apparatus comprising:
one or more processors; and
a storage medium storing one or more programs configured to be executable by the one or more processors,
wherein the one or more processors are configured to:
analyze a migration method, a type of migration, migration difficulty and a migration effort to migrate resources of an existing computer room for a work system to a cloud, and
compute at least one of an architecture of the cloud, a result of comparison of total cost ownership (TCO) for resources of the cloud versus resources of the existing computer room for the work system, and a roadmap for each migration stage when migrating to the cloud based on at least one of the migration method, the type of migration, the migration difficulty and the migration effort.

2. The apparatus of claim 1, wherein the one or more processors are configured to perform analysis on a basis of rules based on survey, where being on a basis of the rules is a method of summing pre-assigned scores for answers to questions included in each of the migration method, the type of migration, the migration difficulty and the migration effort and averaging the scores.

3. The apparatus of claim 1, wherein the migration method includes at least one of a rehost method, a replatform method, a refactor method, a repurchase method and a retire method.

4. The apparatus of claim 3,
wherein the one or more processors are configured to select one of the migration methods for each of sections according to an average value obtained by summing and averaging scores pre-assigned according to answers to questions included in a survey for each of the migration methods, where the section includes at least one of an application, a database management system (DBMS) and a storage, and
wherein the questions included in the survey include evaluation questions for migrating resources of the existing computer room for the work system to the corresponding migration method.

5. The apparatus of claim 1, wherein the type of migration includes at least one of a private cloud which builds an independent cloud, a public cloud in which multiple users share resources, and a hybrid cloud which is a combination of the private cloud with the public cloud.

6. The apparatus of claim 5,
wherein the one or more processors are configured to select one of the types of migration according to an average value obtained by summing and averaging scores pre-assigned according to answers to questions included in a survey for each section, wherein the section includes at least one of demand volatility, cost reduction, business, a current level of work system, a required level of work system, a level of security and a risk, and
wherein the questions included in the survey include evaluation questions for migrating resources of the existing computer room for the work system to the corresponding type of migration.

7. The apparatus of claim 6,
wherein the demand volatility, the cost reduction, the business, and the current level of work system are related to a private cloud among the types of migration, and
wherein the required level of work system, the level of security and the risk are related to a public cloud,
wherein the one or more processors are configured to:
select the private cloud among the types of migration when an average value obtained by summing and averaging scores pre-assigned according to answers to the entirety of questions in a section for the private cloud is greater than an average value obtained by summing and averaging scores pre-assigned according to answers to the entirety of questions in a section for the public cloud,
select the public cloud among the types of migration when an average value obtained by summing and averaging scores pre-assigned according to answers to the entirety of questions in a section for the private cloud is smaller than an average value obtained by summing and averaging scores pre-assigned according to answers to the entirety of questions in a section for the public cloud, and
select the hybrid cloud among the types of migration when an average value obtained by summing and averaging scores pre-assigned according to answers to the entirety of questions in a section for the private cloud is the same as an average value obtained by summing and averaging scores pre-assigned according to answers to the entirety of questions in a section for the public cloud.

8. The apparatus of claim 1,
wherein the migration difficulty is a degree of difficulty for migrating resources of the existing computer room for the work system to the cloud,
wherein the one or more processors are configured to analyze migration difficulty according to an average value obtained by summing and averaging scores pre-assigned to answers to questions included in a survey for each section, wherein the section includes at least one of development environment of the work system, operating system (OS), Database Management System (DBMS), linkage, and analyzed migration method,
wherein the questions included in the survey include evaluation questions to analyze the migration difficulty.

9. The apparatus of claim 1,
wherein the migration effort is an effort for manpower put in to migrate resources of the existing computer room for the work system to a cloud,
wherein the one or more processors are configured to compute the migration effort by adding the entirety of values multiplied by a predetermined constant to answers to questions included in a survey for each section, where the predetermined constant is different for each question, and the section includes at least one of a system status, a method of performing migration, a database status, a container status, a storage status, a disaster recovery (DR) status and a software status required for migration to the cloud.

10. The apparatus of claim 1,
wherein the one or more processors are configured to compute the architecture by mapping resources of the existing computer room for the work system to resources of the cloud selected according to the migration method and the type of migration with reference to migration criteria information, wherein the migration criteria information is obtained by mapping resources of the existing computer room with the resources of the cloud for the work system.

11. The apparatus of claim 1,
wherein the one or more processors are configured to:
compute a total cost ownership of resources of the existing computer room for the work system with reference to a discovery result of resources of the existing computer room for the work system and a resource unit price table of resources of the existing computer room for the work system,
compute a total cost ownership for resources of a cloud selected according to the migration method and the type of migration with reference to the resource unit price table of the cloud, , and
compute a result of comparison of the total cost ownership of the cloud selected according to the migration method and the type of migration with a total cost ownership of resources of the existing computer room for the work system.

12. The apparatus of claim 1,
wherein the one or more processors are configured to compute the roadmap for each migration stage based on at least one of the types of migration, the migration difficulty and the result of comparison of the total cost ownership, and
wherein the roadmap for each migration stage refers to a migration timing for migrating resources of the existing computer room for the work system to the cloud.

13. The apparatus of claim 1,
wherein the one or more processors are configured to analyze a level of preparation of a customer company according to an average value obtained by summing and averaging scores pre-assigned to answers to questions included in a survey for each section, where the section includes at least one of a strategy/organization, a technology literacy, a governance, a process, an infrastructure, an architecture, and a platform/application,
wherein the questions included in the survey include evaluation questions for diagnosing a level of preparation of a customer company for introduction of cloud.

14. The apparatus of claim 13, further comprising:
an output portion configured to output at least one of a level of preparation of a customer company for introduction of cloud, the migration method, the type of migration, the migration difficulty, the migration effort, the architecture, the result of TCO comparison and the roadmap for each migration stage.
